# EUROPEAN PATENT SPECIFICATION

(11) **EP 3 635 345 B1**
(45) Date of publication and mention of the grant of the patent: **05.07.2023**
(21) Application number: 18721061.2
(22) Date of filing: 08.05.2018
(51) Int. Cl.: G01F 1/66, G01F 15/14

(54) **FLOW METER WITH DUAL FLOW INSERTS**
DURCHFLUSSMESSER MIT ZWEI GETRENNTEN EINSÄTZEN
DÉBITMÈTRE DOTÉ DE DEUX INSERTS SÉPARÉS

(30) Priority: 08.05.2017 EP 17169941
(43) Date of publication of application: 15.04.2020
(73) Proprietor: Kamstrup A/S, 8660 Skanderborg (DK)
(72) Inventor: ALFREÐSDÓTTIR, Nanna Karen, 8700 Horsens (DK)
(74) Representative: Plougmann Vingtoft a/s
(86) International application number: PCT/EP2018/061779
(87) International publication number: WO 2018/206536

(56) References cited:
- EP-A1- 2 270 439
- EP-A1- 2 270 439
- EP-B1- 0 897 101
- US-A1- 2003 000 315
- US-A1- 2016 223 373
- US-A1- 2016 223 373

## Description

### FIELD OF THE INVENTION

The invention relates to an ultrasonic flow meter for ultrasonic measurements of fluid flow e.g. as used in a consumption meter.

### BACKGROUND OF THE INVENTION

Ultrasonic flow meters for measuring fluid flow in connection with charging of a consumed quantity (e.g. heat, cooling, water or gas) are required to measure fluid flow at a high precision. As such consumption meters are deployed in great numbers, it is preferred that meters can be manufactured in an automated mass production process.

EP 0 897 101 B1 by Electrowatt Technology discloses an ultrasonic flow meter, with separate reflector inserts which are arranged for insertion into the housing from respective ends of the through-going hole of the housing. The reflector inserts are fixed in a longitudinal direction by means of snap engagement. The flow meter disclosed in EP 0 897 101 B1 requires a number of assembly steps, since first one of the inserts must be snapped into position from one end of the housing, then the measuring tube must be inserted from the opposite end, and finally the second flow insert must be snapped into position. Thus, a number of single elements are required, and several steps are required in the final assembly state of the meter. Still further, the insert is not fixed in a rotational direction in relation to the housing.

EP 2 513 610 B1 by Kamstrup discloses an ultrasonic flow meter with a monolithic polymeric housing with a flow tube. A pre-fabricated element with ultrasound reflectors at each end of a measuring tube is inserted in the polymeric housing.

### SUMMARY OF THE INVENTION

It may be seen as an object of the present invention to provide an improved ultrasonic flow meter which has a low level of complexity regarding manufacturing, in particularly in connection with assembly of the flow meter, being suited for high precision flow measurements and still provide a low fluid pressure loss in spite of compact dimensions.

In a first aspect, the invention provides an ultrasonic flow meter arranged to measure a flow rate of a fluid, the meter comprising
- a housing of a polymeric material, wherein the housing comprises a flow tube forming a flow channel with first and second fluid openings at each end of the flow tube, wherein a first mounting face is formed in the flow tube by a reduction in a cross-sectional area of the flow channel at a first distance from the first fluid opening, wherein a second mounting face is formed in the flow tube by a reduction in a cross-sectional area of the flow channel at a second distance from the first fluid opening, wherein the first distance is larger than the second distance, and wherein the cross-sectional area of the flow channel at the first distance is smaller than the cross-sectional area of the flow channel at the second distance,
- a first flow insert of a polymeric material, the first flow insert forming a measuring tube and a first ultrasound reflector holder arranged outside a first end of the measuring tube, wherein a mounting flange structurally connected to the measuring tube is arranged to face the first face, and
- a second flow insert of a polymeric material, the second flow insert forming a second ultrasound reflector holder structurally connected to a mounting flange arranged to face the second mounting face,
further comprising first and second ultrasound transducers arranged to transmit and receive ultrasonic signals through the measuring tube via first and second ultrasound reflectors fixed at the respective ultrasound reflector holders, so as to allow ultrasonic measurement of a fluid flowing through the measuring tube.

Such flow meter unit is advantageous, since it can be manufactured in a highly automated manufacturing process with a limited number of sub-assembly operations. The inserts can be manufactured separately from the housing without the need for any sub-assembly steps, and the inserts can then be secured in the housing by insertion from one end of the flow tube of the housing, i.e. the first fluid opening. Thus, manufacturing is facilitated, since there is no need to turn the housing during inserting and fixing both inserts.

Due to the well-defined mounting faces in the flow tube of the housing, the first and second flow inserts, and thereby the ultrasound reflectors, will be positioned precisely relative to each other in a longitudinal direction. This means that the length between the ultrasound reflectors is determined with a high precision, and this is an important parameter for high precision ultrasound flow measurements. Even further, if the first and second flow inserts are fixed to the mounting faces of the flow tube, e.g. by ultrasonic welding, the length between the ultrasound reflectors will remain stable over time, irrespective of any temperature changes.

Further, with the two inserts being inserted in the flow tube of the housing from one side only, the resulting position and orientation of the ultrasound reflectors will only be minimally influenced by a possible curvature of the flow tube. Thus, the flow meter is rather tolerant to production tolerances with respect to a possible curvature of the flow tube.

With respect to fluid pressure loss, the flow meter of the first aspect is advantageous, since there is no structural connection between the two inserts, each of which carries an ultrasound reflector. Thus, eliminating such potentially bulky structure for connecting the two ultrasound reflectors, valuable space is saved, which helps to keep the fluid pressure loss low. At the same time, this allows space for integrating a flow straightening structure at the inlet side, which will help to increase the dynamic range of the flow meter, still with a low fluid pressure loss.

Further, the structure of the flow tube and the inserts allows various possibilities for fixing the inserts inside the flow tube, including mechanical locking mechanisms, gluing, or ultrasonic welding. Especially, fixing the inserts by gluing or ultrasonic welding may be preferred compared to fixing by means of snap or click type locking mechanisms, since it is possible to provide a more precise control position and orientation of ultrasound reflectors in the flow tube. Due to the mounting faces formed inside the flow tube, the inserts will have fixed positions relative to the openings for the associated ultrasonic transducer, and thus it is ensured that the reflectors have a fixed position relative to the ultrasonic transducers, once they are mounted in these openings. Still, in case of ultrasonic welding, this precision fixing can be obtained without the need for the use of any glue which can be problematic in relation to a water meter for measuring flow of drinking water. Thus, the meter is suitable as a consumption meter for measuring flow of water in case of ultrasonic welding or other non-toxic fixing methods for fixing the inserts in the flow tube.

Still further, the flow meter is advantageous, since it is possible to manufacture one standard size of housing which can be used for different meters suited for respective dimensions of fluid flow, since this can be determined by selecting a measurement tube insert with a suitably sized inner diameter.

In one embodiment, the mounting flange of the first flow insert is fixed to the first mounting face by means of ultrasonic welding. Further, the mounting flange of the second flow insert may be fixed to the second mounting face by means of ultrasonic welding. Hereby, the mounting faces formed in the flow tube are utilized for fixing the inserts by means of ultrasonic welding, and for this purpose they may be formed with energy directing structures. Ultrasonic welding provides an endurable and high precision fixing without the need for the use of any glue which can be problematic in relation to a water meter for measuring flow of drinking water. Thus, in these embodiments, the meter is suitable as a consumption meter for measuring flow of water. Further, the process of ultrasonic welding helps to reduce any possible effect of a possible curvature of the flow tube of the housing, since the heating process of the ultrasonic welding tool will help to correct the positioning of the inserts irrespective of any possible curvature of the flow tube.

Alternatively, the mounting flange structurally connected to the measuring tube may be fixed to the first mounting face by means of glue. Further, the mounting flange structurally connected to second ultrasound reflector holder may also be fixed to the second mounting face by means of glue. E.g. a non-toxic glue may be preferred.

The first and second flow inserts may comprise respective portions serving to engage with matching portions of the flow tube of the housing, so as to determine the angular position of the first and second flow inserts in the flow tube. This may be in the form of matching indentations and protrusions to allow a precise and easy positioning of the second flow insert during manufacturing. Especially, a flat portion of the mounting flange of the first flow insert may serve to engage with a matching flat portion of the flow tube, so as to fix the angular position of the first flow insert in the flow tube. This helps to allow an efficient yet precise positioning of the first flow insert during an automated manufacturing process.

The first and second mounting faces may form respective surfaces which are perpendicular to or substantially perpendicular to a longitudinal direction of the flow tube, i.e. with an angle of 90° or around 90° with an axis in a longitudinal direction of the flow tube. However, it is to be understood that the mounting faces may form surfaces which provide angles with the longitudinal direction of the flow tube of such as 30° to 90°, or 50° to 90°.

The first and second mounting faces may form respective circumferential faces to which the respective first and second flow inserts are fixed, e.g. by means of ultrasonic welding or gluing. Such circumferential faces may angularly extend on the entire inner surface of the flow tube or only a part thereof. Especially, the first mounting face may angularly extend on the entire inner surface of the flow tube, so as to allow a fluid tight fixing between the mounting flange of the first flow insert and the first mounting face in order to hinder any fluid flow in the space between the measuring tube and the flow tube.

The first flow insert may have one or more outer protrusions at or near the first end of the measuring tube, so as to control a position of the first end of the measuring tube inside the flow tube. Such protrusions may be angularly distributed at the periphery of the measuring tube end, serving to support the first end of the measuring tube, and thereby also to the first ultrasound reflector holder, against the inner wall of the flow tube, thereby allowing a precise position of the first ultrasound reflector in the flow channel.

At the first flow insert, the mounting flange structurally connected to the measuring tube may be positioned at a second end of the measuring tube, i.e. opposite the first end of the measuring tube. At the second flow insert, the mounting flange structurally connected to the second ultrasound reflector holder is positioned at an end of the ultrasound reflector holder opposite an end arranged to hold the second ultrasound reflector.

The measuring tube and the flow tube of the housing may be shaped so as to provide a space between the measuring tube and the flow tube, wherein said space is arranged to be fluid filled during operation of the flow meter. Especially, only the first end of the first flow insert may have fluid opening(s) to allow fluid to enter the space between the measuring tube and the flow tube. The mounting flange of the first flow insert may be fixed to the first mounting face so as to provide a fluid tight connection to the flow tube, thereby hindering a flow of fluid in the space between the measuring tube and the flow tube.

Further, the first ultrasound reflector holder and the measuring tube may be formed as one single monolithic element of a polymer. Such element may be cast or moulded, and the first ultrasound reflector holder may be provided with a tail fin to improve fluid flow, thereby resulting in a lower fluid flow pressure drop in the flow meter. Alternatively, the first ultrasound reflector holder and the measuring tube may be provided as separate elements that are assembled to form the first flow insert.

The second flow insert may form a flow straightening structure arranged to straighten flow of fluid passing the straightening structure. With the first fluid opening providing the fluid inlet for the meter, the flow straightening structure, e.g. fins, of the second flow insert may improve flow measurement precision.

By forming the first and second mounting faces as step-wise indentations of the cross-sectional area of the flow tube, it is possible to manufacture the housing by casting the housing as one single monolithic polymeric element without the need for further processing steps.

The housing may comprise a third mounting face of the flow tube being positioned at a third distance from the first fluid opening, wherein the second distance is larger than the third distance, wherein the second mounting face forms a cross-sectional area of the flow channel which is smaller than a cross-sectional area of the flow channel formed by the third mounting face. Especially, the meter may comprise a fluid filter designed to stop passage of particles larger than a predetermined size, wherein the fluid filter comprises a mounting flange arranged to face the third mounting face, e.g. this mounting flange may be ultrasound welded to the third mounting face, or this mounting flange may not be fixed to the third mounting face, since the fluid filter function is not dependent on precise position and angular fixing, and further the filter may more easily be replaced.

The measuring tube forms a straight fluid flow measurement channel with a circular cross-sectional area. Especially, at least 50% of a total length of the measuring tube forms a straight fluid flow measurement channel with a constant circular cross-sectional area.

The first ultrasound reflector holder may be fixed to a limited portion of the first end of the measuring tube only, and wherein the ultrasound reflector holder is shaped as a fluid dynamic fin. This helps to keep the total fluid flow pressure drop of the meter low.

Additionally, the cross-sectional area of the flow channel of the housing may be circular. Especially, the inner diameter of the flow channel may be within the interval 5 mm to 150 mm, such as within the interval 10 mm to 100 mm, such as within the interval 25 mm to 75 mm, such as 50 mm, measured at the first fluid opening. The measurement tube may especially have a measurement channel with a diameter within the interval of 5-15 mm, however diameters smaller than 5 mm and larger than 15 mm are of course possible. The flow meter design is advantageous for allowing one size of flow channel to be used together with measurement tubes with different measurement channel diameter. Hereby, one single housing component can be used for flow meters specified for different flow capacities.

The reflector arrangement and the measuring tube arrangement may be provided in one single moulding process to form the first flow insert. One design of a reflector arrangement can be combined with different measuring tube arrangements, e.g. having different measuring channel diameters, thus allowing a high versatility of single pre-fabricated parts.

The polymeric material may be selected from, but is not limited to, the group consisting of polyphenylene sulphide (PPS), polyether sulphone (PES) and Polyether Sulphone (PSU). It is noted that the properties of the polymeric materials can be customized by adding certain additives prior to the moulding process, affecting the material properties such as stiffness, density or the acoustic impedance. Examples of potential additives include reinforcement materials such as glass fibres, density increasing fillers such as chalk (calcium carbonate, CaCO3) or powdery stainless steel raising the acoustic impedance of the material.

The same polymeric material may be used for the housing and the first- and second flow inserts. The ultrasound reflectors to be mounted on (or imbedded in the material of) the first and second ultrasound reflector holders may be made of metal.

In some embodiments, the ultrasonic flow meter is or is part of an ultrasonic consumption meter such as for charging purposes. Especially, the consumption meter may be a water meter, gas meter, heat meter, or cooling meter. The consumption meter may be a legal meter, i.e. a meter which is subdued to regulatory demands. Such regulatory demands may be demands to the precision of the measurements.

### BRIEF DESCRIPTION OF THE DRAWINGS

Embodiments of the invention will be described, by way of example only, with reference to the drawings, in which
Figs. 1a and 1b illustrate 3D section views of a flow meter housing embodiment,
Figs. 2a and 2b illustrate section views of the same housing embodiment as Figs. 1a and 1b,
Fig. 3 illustrates a section view of the same housing embodiments as in Figs. 1 and 2 with ultrasound reflector holders and measurement tube embodiments mounted therein,
Fig. 4 illustrates a 3D view of an embodiment with the housing and the two inserts prior to insertion in the through-going hole of the housing,
Figs. 5a-5c illustrate various view of an ultrasound reflector holder insert embodiment: a 3D view, and views from respective ends,
Figs. 6a-6c illustrate various view of an embodiment of the combined measuring tube and ultrasound reflector holder insert: a 3D view, and views from respective ends,

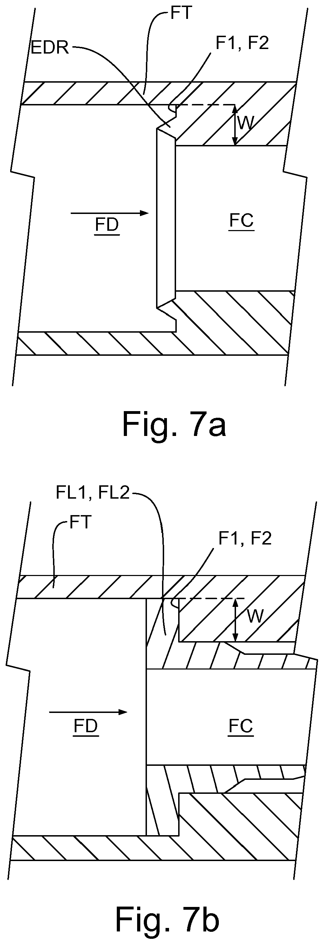

Figs. 7a and 7b illustrate an example of an energy director on the mounting faces inside the flow tube for directing energy during ultrasonic welding for fixing the mounting flanges of the inserts.

### DESCRIPTION OF EMBODIMENTS

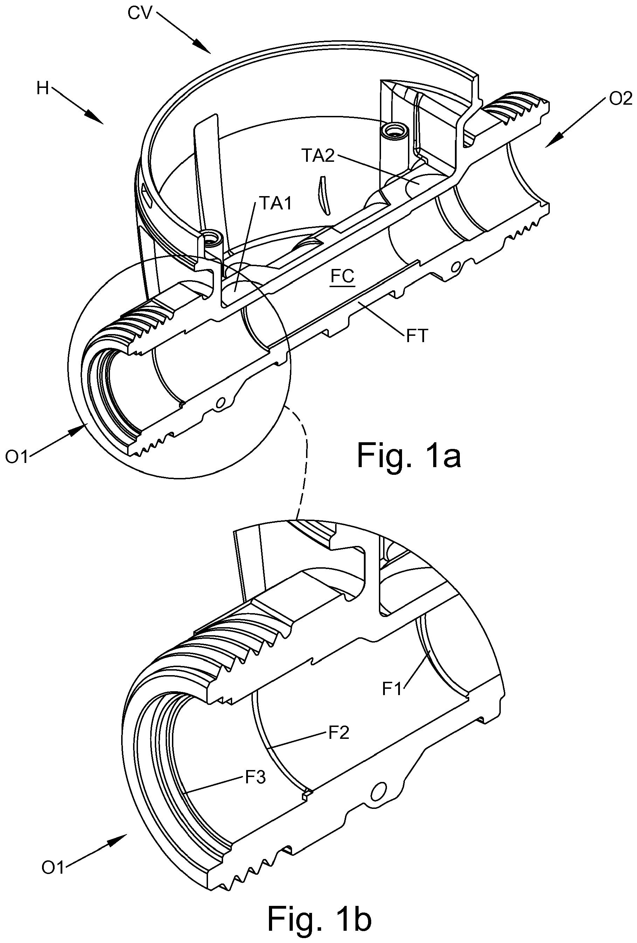

Figs. 1a, 1b, 2a, 2b and 3 show the same ultrasonic flow meter embodiment to be described in the following. A polymeric housing H forms a monolithic structure comprising a portion forming a flow tube FT and a portion forming a generally cup shaped cavity CV arranged to house first and second ultrasound transducers at respective surfaces TA1, TA2 as well as a measurement circuit, battery and communication module (not shown). The flow meter is arranged to measure the flow rate of a fluid, e.g. water. Especially, the flow meter may form part of a consumption meter or utility meter, e.g. a water meter, for charging purposes. The cavity CV may house a communication module for radio frequency communication of measured flow rate data. The flow tube FT portion is arranged at a lower part of the cup shaped cavity CV, and the cup shaped cavity CV defines an opening at its upper part to be covered by a water tight lid. The opening may be circular, and it is arranged to allow mounting of the ultrasound transducers as well as measurement circuit connected to the ultrasound transducers, battery, communication module, etc.

The flow tube FT forms a straight flow channel FC with a circular cross section and with first and second fluid openings O1, 02 at each end of the flow tube FT. Outer portions of the ends of the flow tube FT are threaded, thereby allowing connection to pipes of a fluid installation.

Inside the flow tube FT, first, second and third circumferential mounting faces F1, F2, F3 are formed by a step-wise reduction of the cross-sectional area of the flow channel, i.e. a step-wise reduction in diameter of the flow channel FC, starting from the first fluid opening O1. The three mounting faces F1, F2, F3 all face towards the first fluid opening O1. The first mounting face F1 is formed by a reduction in the cross-sectional area of the flow channel FC at a first distance d1 from the first fluid opening O1. The second mounting face F2 is formed by a reduction in cross-sectional area of the flow channel FC at a second distance d2 from the first fluid opening 01. The third mounting face F3 is formed by a reduction in cross-sectional area of the flow channel FC at a third distance d3 from the first fluid opening O1. Regarding the distances; d1>d2>d3. The third mounting face is thus arranged upstream of the first and second mounting faces and the second mounting face is arranged upstream of the first mounting face. A cross-sectional area of the flow channel at the first distance d1 is smaller than a cross-sectional area of the flow channel FC at the second distance d2, which is again smaller than a cross-sectional area of the flow channel FC at the third distance d3. The mounting faces F1, F2, F3 can especially be formed to provide plane surfaces perpendicular to a longitudinal direction of the flow tube FT.

With this structure of the housing H, it is possible to mould the polymeric housing with flow tube and cavity VC as one single monolithic element, which may be advantageous with respect to reduced manufacturing costs, as well as with respect to ensuring protection of the sensitive components (such as ultrasound transducers, measurement circuit, battery) from humidity caused by leaking fluid due to potential leaks between separate elements serving to carry the pressure of the fluid.

A first flow insert FI1 of a polymeric material forms a measuring tube MT, and a first ultrasound reflector holder RH1 arranged outside a first end MTE1 of the measuring tube MT. A mounting flange FL1 is structurally connected to the measuring tube at its second end MTE2, and the mounting flange FL1 is arranged to engage the first mounting face F1 after the first flow insert FI1 has been inserted into the flow tube FT from the first fluid opening O1.

A second flow insert FI2 of a polymeric material forms a second ultrasound reflector holder RH2 structurally connected to a mounting flange FL2 arranged to engage the second mounting face F2 after the second flow insert FI2 has been inserted into the flow tube FT from the first fluid opening O1. In one embodiment, the mounting flanges FL1, FL2 of the first and second flow insert FI1, FI2, respectively, are fixed to the first and second mounting faces F1, F2 by means of ultrasonic welding.

The mounting faces F1, F2 formed by the structure of the flow tube FT and thus being integral with the housing H structure, serve to provide precise positioning of the inserts FI1, FI2 relative to the housing structure H. Such precise positioning is important with respect to ensure precise transmission of ultrasound signals in spite of various production tolerances. By fixing the inserts FI1, FI2 to the mounting faces F1, F2 by ultrasonic welding, the ultrasound reflector holders RH1, RH2, and thus also the ultrasound reflectors R1, R2, are precisely fixed to the housing H structure, and thereby remains at the desired position preventing angular or longitudinal displacement of the ultrasound reflectors R1, R2 in the flow tube FT over time. Hereby, adverse displacement of the reflectors that may disturb the ultrasound signal transmission and cause imprecise flow rate measurements, is prevented. Even in cases where production tolerances result in a slightly curved flow tube FT, the short distance between the two mounting faces F1, F2 has the effect that the curvature only resulting in a minor mal-orientation of the ultrasound reflectors R1, R2. Additionally, ultrasonic welding is a non-toxic means for fixing or attaching the inserts FI1, FI2 and therefore allows the flow meter to function as a water meter for measuring flow of drinking water.

Flow meters according to embodiments of the invention are advantageous for automated or semi-automated manufacturing, since the first and second flow inserts FI1, FI2 can both be inserted through the same opening, i.e. the first fluid opening O1. This eliminates the need for turning the housing H during the manufacturing process. Still, using ultrasonic welding, stable and precise positioning can be obtained.

The ultrasound transducers are arranged for being positioned at the surfaces TA1, TA2 in the cavity CV of the housing H and being arranged to transmit and receive ultrasonic signals through a fluid flow measuring channel MC formed by the measuring tube MT via first and second ultrasound reflectors R1, R2 fixed at the respective ultrasound reflector holders RH1, RH2, so as to allow ultrasonic measurement of a fluid flowing through the measuring tube MT. Thus, the ultrasound transducers are arranged to transmit ultrasound signals through the wall of the flow tube FT.

The third mounting face F3 can be used to engage, and e.g. fix, a flange of a fluid filter (not shown) for hindering particles of a given size in entering the measuring tube MT.

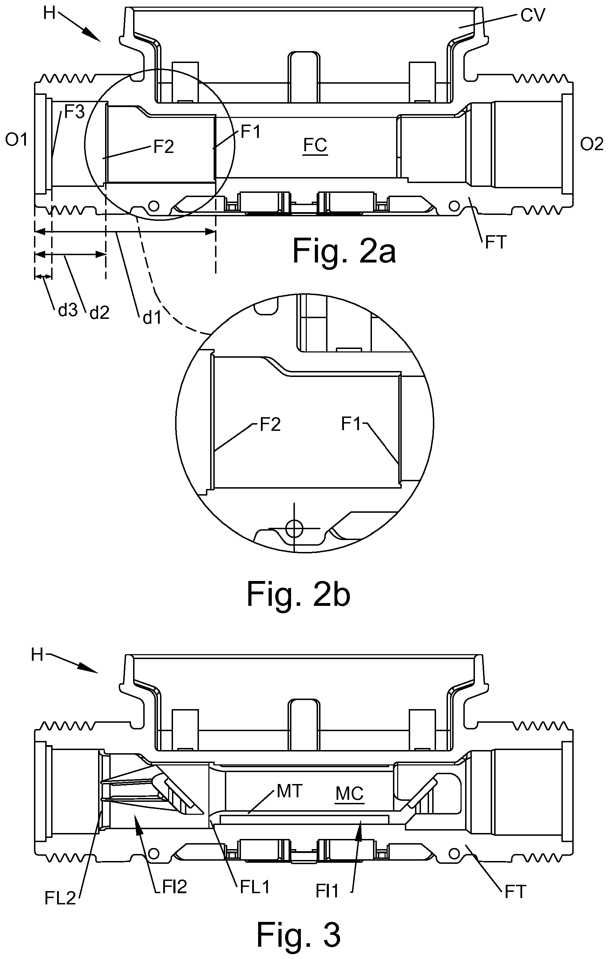

As can be seen in Fig. 3, where the inserts FI1, FI2 are mounted in the flow tube FT, the measuring tube MT is shaped so as to provide a space between the measuring tube MT and the flow tube FT of the housing (H), wherein said space is arranged to be fluid filled during operation of the flow meter.

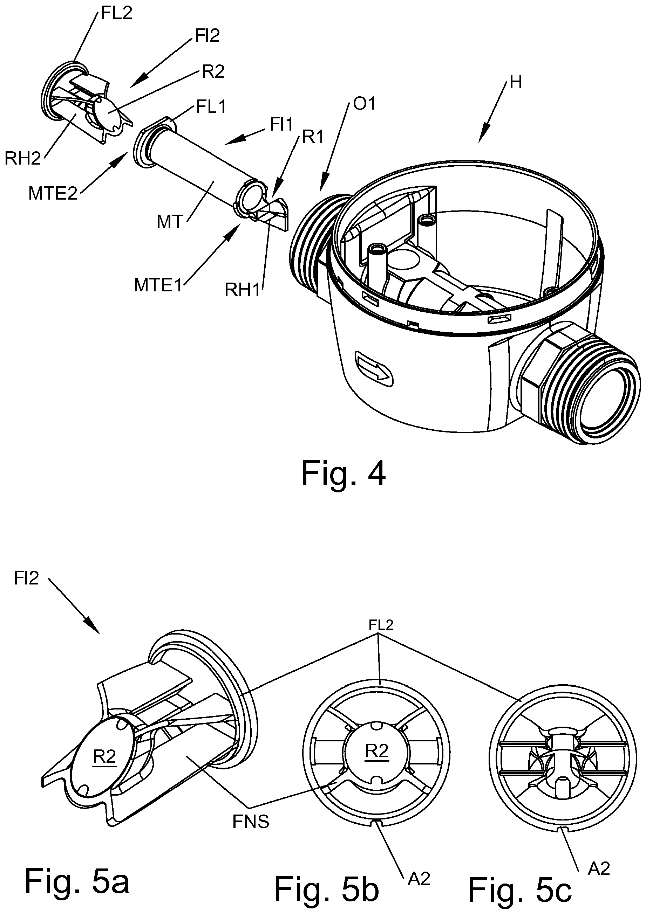

Fig. 4 shows, for the same embodiment as in the preceding Figures, a 3D sketch of the housing H and the inserts FI1, FI2 prior to insertion into the first fluid opening O1 of the housing H.

The first flow insert FI1 may include a single monolithic polymeric element forming the measuring tube MT and the first ultrasound reflector holder RH1, while a metallic ultrasound reflector R1 element is attached to the first ultrasound reflector holder RH1. The metallic ultrasound reflector R1 may be moulded together with the monolithic polymeric element in a single manufacturing step. With the rigid polymeric structure connecting the first ultrasound reflector holder RH1 and the mounting flange FL1, a high position precision of the first ultrasound reflector R1 can be obtained. The first ultrasound reflector holder RH1 is seen in this embodiment to be fluid dynamically shaped so as to provide a low fluid pressure loss.

The second flow insert FI2 may be formed by a single polymeric element forming the second ultrasound reflector holder RH2 and a metallic ultrasound reflector R2 element which is attached to the reflector holder. Manufacturing wise, the polymeric element and the reflector element may be joined in a single moulding process.

Figs. 5a-5c show details of the second flow insert FI2 and the second ultrasound reflector holder RH2. The second flow insert FI2 has four curved fins FNS shaped to provide a fluid flow straightening effect. The four fins FNS further serve to structurally connect the ring-shaped mounting flange FL2 at one end and the reflector holding structure at the opposite end. The mounting flange FL2 forms a plane surface perpendicular to a longitudinal direction, which surface is arranged to be fixed to the second mounting face F2 of the flow tube FT, e.g. in a fluid tight manner. At the mounting flange FL2 end, the four fins FNS are shaped so as to form two parallel plate structures, seen in the flow direction, whereas the fins FNS are curved so as to form four plates equally angularly distributed at the reflector holding structure, seen in a flow direction. The reflector holding structure serves to fix the second ultrasound reflector R2 in an angle of 45°, so as to allow reflection of ultrasound between a direction along the longitudinal direction of the flow tube FT and a direction perpendicular to the longitudinal direction of the flow tube FT. The reflector holding structure itself is shaped smooth, seen in the flow direction, so as to provide a low fluid pressure loss. The mounting flange FL2 has an indentation serving to engage with a matching protrusion of the inner part of the flow tube FT (not visible), so as to fix angular orientation of the second flow insert FI2 in relation to the flow tube FT.

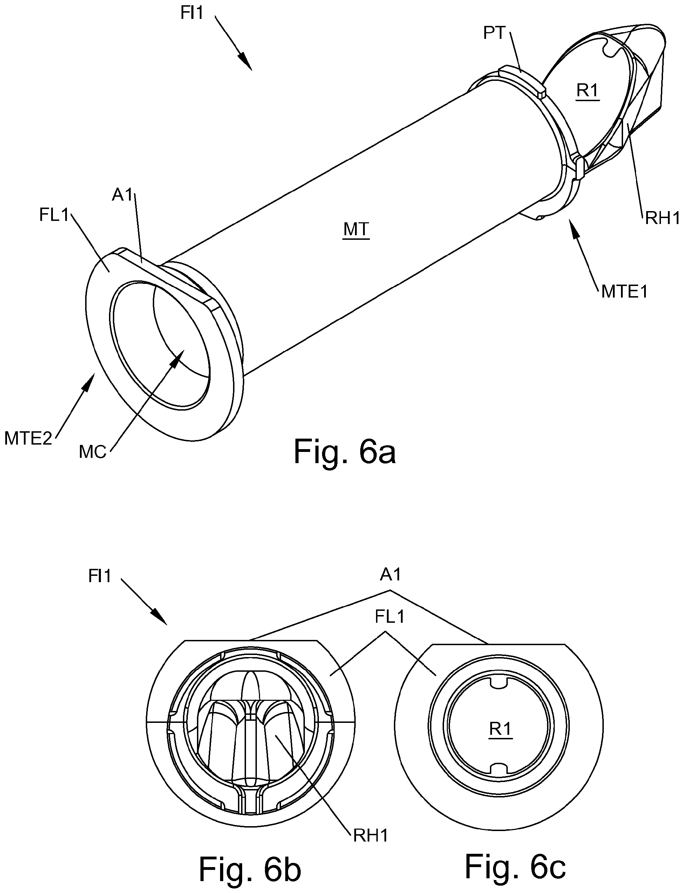

Figs. 6a-6c show the first flow insert FI1 in further detail. The straight measuring tube MT has a constant inner circular cross-sectional and connects the first ultrasound reflector holder RH1 at one end MTE1 with the mounting flange FL1 at the opposite end MTE2 of the measuring tube MT. The measuring tube MT hereby forms a straight fluid flow measuring channel MC with a circular cross-sectional area. The mounting flange FL1 forms a plane surface perpendicular to a longitudinal direction, which surface is arranged to be fixed to the first mounting face F1 of the flow tube in a fluid tight manner so as to avoid any fluid bypassing the fluid flow measuring channel MC. The mounting flange FL1 has a flat portion A1 at its periphery helping to fix the first flow insert FI1 angularly during insertion into the flow tube FT via engagement with a matching flat portion of the inner side of the flow tube FT. Further, at the first end MTE1 of the measuring tube MT, a flange with protrusions PT serves to radially support the first end MTE1 of the first flow insert FI1 inside the flow tube FT, and thereby helps to ensure a precise and stable position of the ultrasound reflector R1 in the flow channel FC. The protrusions PT are dimensioned so as to provide a minimal clearing to avoid the protrusions being in direct contact with the inner wall of the flow tube FT. Further, it is seen that the protrusions PT are angularly distributed on the flange, thereby allowing fluid to enter a cavity formed between the measuring tube MT and the inner wall of the flow tube FT.

The first reflector holder RH1 serves to fix the first ultrasound reflector R1 in an angle of 45°, so as to allow reflection of ultrasound between a direction along the longitudinal direction of the flow tube FT and a direction perpendicular to the longitudinal direction of the flow tube FT. The reflector holding structure itself is shaped smooth, seen in the flow direction, so as to provide a low fluid pressure loss. At one end, the first reflector holder RH1 is structurally connected to the first end MTE1 of the measuring tube MT at a limited part of the periphery of the measuring tube MT only, thereby reducing unnecessary space occupying the cross-sectional area of the flow tube FT, thus helping to reduce fluid pressure loss. To further reduce fluid pressure loss, the first reflector holder RH1 has a smooth fin shaped structure behind the first ultrasound reflector R1, seen in the fluid flow direction.

Embodiments of the ultrasonic flow meter described in the foregoing may be manufactured in an automated and cost effective manner. The housing H of a polymeric material may be manufactured in a single moulding process. Similarly, the first and second flow insert may be moulded from a polymeric material. During assembly of the meter, the inserts FI1, FI2 are to be inserted into the flow tube FT of the housing H. First, the first flow insert FI1 is inserted through the first fluid opening O1 of the housing H, so that the mounting flange FL1 structurally connected to the measuring tube MT engages the first mounting face F1. Next, the mounting flange FL1 of the first flow insert FI1 is fixated to the first mounting face F1 by means of ultrasonic welding. Afterwards, the second flow insert is inserted through the first fluid opening O1 of the housing H, so that its mounting flange structurally connected to the second ultrasound reflector holder engages the second mounting face F2. Following, the mounting flange FL2 is fixed to the second mounting face F2 by means of ultrasonic welding. Such method of manufacturing is suitable for manufacturing of high precision flow meters based on an automated or semi-automated manufacturing process.

Fig. 8a shows a detailed view of an exemplary embodiment of the first and second mounting faces F1, F2 inside the flow tube FT, as they would be before insertion and ultrasonic welding of the flow inserts. The mounting faces F1, F2 are provided with energy directors EDR, i.e. raised beads of material, e.g. having a triangular shape as illustrated, adapted to melt during the ultrasound welding process. Alternatively, the mounting flanges FL1, FL2 of the first and second flow inserts may be provided with such energy directors on the side facing the mounting face F1, F2 of the flow tube FT. The primary function of the energy director EDR is to concentrate ultrasonic energy to rapidly initiate the softening and melting of the joining surface. The energy director EDR permits rapid welding while achieving maximum strength. Especially, a butt-joint type of energy director EDR with a triangular shape may be used. In case of using PPS for the inserts and housing, i.e. a semi-crystalline material, a height of the energy director EDR of at least 0.4 mm is used. The width W of the first and second mounting faces may be selected to be in the range from 1-3 mm, depending on the overall size of the flow tube FT.

Fig. 8b shows the mounting faces of Fig. 8a after ultrasonic welding of the flow inserts. Here it is seen that the energy director EDR has melted away and the first and second mounting faces F1, F2 form respective surfaces, which are perpendicular to or substantially perpendicular to a longitudinal direction or flow direction FD of the flow tube FT. Hereby, a precise and stable fixing of the flow inserts in the longitudinal direction or flow direction FD of the flow tube FT is provided. Furthermore, by such ultrasonic welding of especially the first flow insert, it is possible to provide a fluid tight connection between the flow tube FT and the first flow insert, thereby ensuring that no fluid will bypass the measuring section in the measuring tube.

To sum up, the invention provides an ultrasonic flow meter for measuring a flow rate of a fluid. The meter has a polymeric housing H forming a flow tube with first and second fluid openings O1, 02. A first mounting face F1 is formed in the flow tube by a reduction in a cross-sectional area at a distance d1 from the first fluid opening O1. A second mounting face F2 is formed by a reduction in a cross-sectional area at a second distance d2 from the first fluid opening O1, wherein d1>d2, and wherein a cross-sectional area at d1 is smaller than a cross-sectional area at d2. A first flow insert FI1 forms a measuring tube MT and a first ultrasound reflector holder RH1 arranged outside a first end of the measuring tube MT. A mounting flange FL1 of the first flow insert FI1 is arranged to engage the first mounting face F1. A second flow insert FI2 forms a second ultrasound reflector holder RH2. A mounting flange FL2 of the second flow insert FI2 is arranged to engage the second mounting face F2. Further, first and second ultrasound transducers are positioned in the housing H and arranged to transmit and receive ultrasonic signals through a fluid flow measuring channel MC formed by the measuring tube MT via first and second ultrasound reflectors R1, R2 fixed at the respective ultrasound reflector holders RH1, RH2, so as to allow ultrasonic measurement of a fluid flowing through the measuring tube MT.

Although the present invention has been described in connection with the specified embodiments, it should not be construed as being in any way limited to the presented examples. The scope of the present invention is to be interpreted in the light of the accompanying claim set. In the context of the claims, the terms "including" or "includes" do not exclude other possible elements or steps. The use of reference signs in the claims with respect to elements indicated in the figures shall also not be construed as limiting the scope of the invention.

## Claims

1. An ultrasonic flow meter arranged to measure a flow rate of a fluid, the meter comprising
- a housing (H), wherein the housing (H) comprises a flow tube (FT) defining a flow channel (FC) with first and second fluid openings (O1, 02) at each end of the flow tube (FT);
- first and second ultrasound transducers arranged to transmit and receive ultrasonic signals through a measuring tube (MT) via first and second ultrasound reflectors (R1, R2) fixed at respective ultrasound reflector holders (RH1, RH2) arranged inside the flow tube (FT), so as to allow ultrasonic measurement of a fluid flowing through the measuring tube (MT);
wherein:
- a first mounting face (F1) for mounting of a first flow insert (FI1) is formed in the flow tube (FT) by a reduction in a cross-sectional area of the flow channel (FC) at a first distance (d1) from the first fluid opening (O1);
- a second mounting face (F2) for mounting of a second flow insert (FI2) is formed in the flow tube (FT) by a reduction in a cross-sectional area of the flow channel (FC) at a second distance (d2) from the first fluid opening (O1), the first distance (d1) being larger than the second distance (d2);
- the first flow insert (FI1) is made of a polymeric material and forms a first ultrasound reflector holder (RH1) arranged outside a first end (MTE1) of the measuring tube (MT) and a mounting flange (FL1)
being arranged for engagement with the first mounting face (F1); and
- the second flow insert (FI2) is made from a polymeric material and forms a second ultrasound reflector holder (RH2) structurally connected to a mounting flange (FL2) and being arranged for engagement with the second mounting face (F2), **characterised in that**:
- the housing is of a polymeric material;
- the cross-sectional area of the flow channel at the first distance (d1) is smaller than the cross-sectional area of the flow channel at the second distance (d2); and
- the first flow insert (FI1) forms a measuring tube (MT) and has a mounting flange (FL1) structurally connected to the measuring tube.

2. Flow meter according to claim 1, wherein the mounting flange (FL1) of the first flow insert (FI1) is fixed to the first mounting face (F1) by means of ultrasonic welding.

3. Flow meter according to claim 1 or 2, wherein the mounting flange (FL2) of the second flow insert (FI2) is fixed to the second mounting face (F2) by means of ultrasonic welding.

4. Flow meter according to any of the preceding claims, wherein the first and second flow inserts are arranged inside the flow tube in continuation of one another.

5. Flow meter according to any of the preceding claims, wherein a distance along a longitudinal axis of the flow tube between the first mounting face (F1) and the second mounting face, corresponds substantially to the extension of the second flow insert along the longitudinal axis.

6. Flow meter according to any of the preceding claims, wherein the mounting flange (FL1) of the first flow insert (FI1) is arranged at a second end (MTE2) of the measuring tube opposite the reflector holder.

7. Flow meter according to any of the preceding claims, wherein the first and second flow inserts (FI1, FI2) comprise respective portions (A1, A2) serving to engage with matching portions of the flow tube (FT) of the housing (H), so as to determine the angular position of the first and second flow inserts (FI1, FI2) in the flow tube (FT).

8. Flow meter according to any of the preceding claims, wherein the first and second mounting faces (F1, F2) form respective surfaces which are perpendicular to or substantially perpendicular to a longitudinal direction of the flow tube (FT).

9. Flow meter according to any of the preceding claims, wherein the first and second mounting faces (F1, F2) form respective circumferential faces inside the flow tube (FT), wherein the first and second mounting faces (F1, F2) face toward the first fluid opening (O1), so as to allow insertion of the first and second flow inserts (FI1, FI2) from the first fluid opening (O1).

10. Flow meter according to any of the preceding claims, wherein the measuring tube (MT) and the flow tube (FT) of the housing (H) are shaped so as to provide a space between the measuring tube (MT) and the flow tube (FT), wherein said space is arranged to be fluid filled during operation of the flow meter.

11. Flow meter according to any of the preceding claims, wherein the mounting flange (FL1) of the first flow insert (FI1) is fixed to the first mounting face (F1) so as to provide a fluid tight connection to the flow tube (FT).

12. Flow meter according to any of the preceding claims, wherein the second flow insert (FI2) forms a flow straightening structure (FNS) arranged to straighten flow of fluid passing the straightening structure.

13. Flow meter according to any of the preceding claims, wherein the second mounting face (F2) is arranged upstream of the first transducer and the first mounting face (F1) is arranged downstream of the first transducer.

14. Flow meter according to any of the preceding claims, wherein the second mounting face (F2) is offset from the first fluid opening by a distance corresponding to a width of the thread outer portion of the end of the flow tube.

15. Flow meter according to any of the preceding claims, wherein a third mounting face (F3) is formed in the flow tube (FT) by a reduction in a cross-sectional area of the flow channel (FC) at a third distance (d3) from the first fluid opening (O1), wherein the second distance (d2) is larger than the third distance (d3), wherein the cross-sectional area of the flow channel (FC) is smaller at the second distance (d2) than the cross-sectional area of the flow channel at the third distance (d3).

## Patentansprüche

1. Ultraschall-Durchflussmesser, der dazu angeordnet ist, eine Durchflussrate eines Fluids zu messen, wobei der Messer Folgendes umfasst:
- ein Gehäuse (H), wobei das Gehäuse (H) ein Durchflussrohr (FT) umfasst, das einen Durchflusskanal (FC) mit einer ersten und einer zweiten Fluidöffnung (O1, 02) an jedem Ende des Durchflussrohrs (FT) definiert;
- einen ersten und einen zweiten Ultraschallwandler, die dazu angeordnet sind, Ultraschallsignale durch ein Messrohr (MT) über einen ersten und einen zweiten Ultraschallreflektor (R1, R2), die an jeweiligen Ultraschallreflektorhaltern (RH1, RH2) angebracht sind, die innerhalb des Durchflussrohrs (FT) angeordnet sind, zu senden und zu empfangen, um so eine Ultraschallmessung eines Fluids, das durch das Messrohr (MT) fließt, zu ermöglichen;
wobei:
- eine erste Befestigungsfläche (F1) zum Befestigen eines ersten Durchflusseinsatzes (FI1) in dem Durchflussrohr (FT) durch eine Verringerung einer Querschnittsfläche des Durchflusskanals (FC) bei einem ersten Abstand (d1) von der ersten Fluidöffnung (O1) gebildet ist;
- eine zweite Befestigungsfläche (F2) zum Befestigen eines zweiten Durchflusseinsatzes (FI2) in dem Durchflussrohr (FT) durch eine Verringerung einer Querschnittsfläche des Durchflusskanals (FC) bei einem zweiten Abstand (d2) von der ersten Fluidöffnung (O1) gebildet ist, wobei der erste Abstand (d1) größer als der zweite Abstand (d2) ist;
- der erste Durchflusseinsatz (FI1) aus einem polymeren Material besteht und einen ersten Ultraschallreflektorhalter (RH1), der außerhalb eines ersten Endes (MTE1) des Messrohrs (MT) angeordnet ist, und einen Befestigungsflansch (FL1), der zur Ineingriffnahme mit dem ersten Befestigungsfläche (F1) angeordnet ist, bildet; und
- der zweite Durchflusseinsatz (FI2) aus einem polymeren Material besteht und einen zweiten Ultraschallreflektorhalter (RH2) bildet, der strukturell an einem Befestigungsflansch (FL2) befestigt ist und zur Ineingriffnahme mit dem zweiten Befestigungsfläche (F2) angeordnet ist, **dadurch gekennzeichnet, dass**:
- das Gehäuse aus einem polymeren Material besteht;
- die Querschnittsfläche des Durchflusskanals bei dem ersten Abstand (d1) kleiner als die Querschnittsfläche des Durchflusskanals bei dem zweiten Abstand (d2) ist; und
- der erste Durchflusseinsatz (FI1) ein Messrohr (MT) bildet und einen Befestigungsflansch (FL1) aufweist, der mit dem Messrohr strukturell verbunden ist.

2. Durchflussmesser nach Anspruch 1, wobei der Befestigungsflansch (FL1) des ersten Durchflusseinsatzes (FI1) an der ersten Befestigungsfläche (F1) mittels Ultraschallschweißen angebracht ist.

3. Durchflussmesser nach Anspruch 1 oder 2, wobei der Befestigungsflansch (FL2) des zweiten Durchflusseinsatzes (FI2) an der zweiten Befestigungsfläche (F2) mittels Ultraschallschweißen angebracht ist.

4. Durchflussmesser nach einem der vorhergehenden Ansprüche, wobei der erste und der zweite Durchflusseinsatz innerhalb des Durchflussrohrs in Fortsetzung zueinander angeordnet sind.

5. Durchflussmesser nach einem der vorhergehenden Ansprüche, wobei ein Abstand entlang einer Längsachse des Durchflussrohrs zwischen der ersten Befestigungsfläche (F1) und der zweiten Befestigungsfläche im Wesentlichen der Erstreckung des zweiten Durchflusseinsatzes entlang der Längsachse entspricht.

6. Durchflussmesser nach einem der vorhergehenden Ansprüche, wobei der Befestigungsflansch (FL1) des ersten Durchflusseinsatzes (FI1) an einem zweiten Ende (MTE2) des Messrohrs gegenüber dem Reflektorhalter angeordnet ist.

7. Durchflussmesser nach einem der vorhergehenden Ansprüche, wobei der erste und der zweite Durchflusseinsatz (FI1, FI2) jeweilige Abschnitte (A1, A2) aufweisen, die dazu dienen, mit entsprechenden Abschnitten des Durchflussrohrs (FT) des Gehäuses (H) in Eingriff zu kommen, um die Winkelposition des ersten und des zweiten Durchflusseinsatzes (FI1, FI2) in dem Durchflussrohr (FT) zu bestimmen.

8. Durchflussmesser nach einem der vorhergehenden Ansprüche, wobei die erste und die zweite Befestigungsfläche (F1, F2) jeweilige Oberflächen bilden, die senkrecht zu oder im Wesentlichen senkrecht zu einer Längsrichtung des Durchflussrohrs (FT) sind.

9. Durchflussmesser nach einem der vorhergehenden Ansprüche, wobei die erste und die zweite Befestigungsfläche (F1, F2) jeweilige Umfangsflächen innerhalb des Durchflussrohrs (FT) bilden, wobei die erste und die zweite Befestigungsfläche (F1, F2) der ersten Fluidöffnung (O1) zugewandt sind, um so Einführen des ersten und des zweiten Durchflusseinsatzes (FI1, FI2) aus der ersten Fluidöffnung (O1) zu ermöglichen.

10. Durchflussmesser nach einem der vorhergehenden Ansprüche, wobei das Messrohr (MT) und das Durchflussrohr (FT) des Gehäuses (H) so geformt sind, dass sie einen Raum zwischen dem Messrohr (MT) und dem Durchflussrohr (FT) bereitstellen, wobei der Raum so angeordnet ist, dass er während des Betriebs des Durchflussmessers mit Flüssigkeit gefüllt ist.

11. Durchflussmesser nach einem der vorhergehenden Ansprüche, wobei der Befestigungsflansch (FL1) des ersten Durchflusseinsatzes (FI1) an der ersten Befestigungsfläche (F1) angebracht ist, um eine fluiddichte Verbindung mit dem Durchflussrohr (FT) bereitzustellen.

12. Durchflussmesser nach einem der vorhergehenden Ansprüche, wobei der zweite Durchflusseinsatz (FI2) eine Durchflussbegradigungsstruktur (FNS) bildet, die dazu angeordnet ist, den Durchfluss von Fluid, das die Begradigungsstruktur passiert, zu begradigen.

13. Durchflussmesser nach einem der vorhergehenden Ansprüche, wobei die zweite Befestigungsfläche (F2) stromaufwärts des ersten Wandlers angeordnet ist und die erste Befestigungsfläche (F1) stromabwärts des ersten Wandlers angeordnet ist.

14. Durchflussmesser nach einem der vorhergehenden Ansprüche, wobei die zweite Befestigungsfläche (F2) von der ersten Fluidöffnung um einen Abstand versetzt ist, der einer Breite des äußeren Gewindeabschnitts des Endes des Durchflussrohrs entspricht.

15. Durchflussmesser nach einem der vorhergehenden Ansprüche, wobei eine dritte Befestigungsfläche (F3) in dem Durchflussrohr (FT) durch eine Verringerung einer Querschnittsfläche des Durchflusskanals (FC) bei einem dritten Abstand (d3) von der ersten Fluidöffnung (O1) gebildet ist, wobei der zweite Abstand (d2) größer als der dritte Abstand (d3) ist, wobei die Querschnittsfläche des Durchflusskanals (FC) bei dem zweiten Abstand (d2) kleiner als die Querschnittsfläche des Durchflusskanals bei dem dritten Abstand (d3) ist.

## Revendications

1. Débitmètre à ultrasons agencé pour mesurer un débit d'un fluide, le débitmètre comprenant :
- un boîtier (H), ledit boîtier (H) comprenant un tuyau d'écoulement (FT) définissant un canal d'écoulement (FC) avec des première et seconde ouvertures de fluide (O1, 02) au niveau de chaque extrémité du tuyau d'écoulement (FT) ;
- des premier et second transducteurs à ultrasons agencés pour émettre et recevoir des signaux ultrasonores à travers un tuyau de mesure (MT) par l'intermédiaire des premier et second réflecteurs à ultrasons (R1, R2) fixés à des supports de réflecteur à ultrasons respectifs (RH1, RH2) agencés à l'intérieur du tuyau d'écoulement (FT), de façon à permettre la mesure par ultrasons d'un fluide s'écoulant à travers le tuyau de mesure (MT) ;
- une première face de montage (F1) destinée au montage d'un premier insert d'écoulement (FI1) étant formée dans le tuyau d'écoulement (FT) par une réduction d'une aire de section transversale du canal d'écoulement (FC) à une première distance (d1) de la première ouverture de fluide (O1) ;
- une deuxième face de montage (F2) destinée au montage d'un second insert d'écoulement (FI2) étant formée dans le tuyau d'écoulement (FT) par une réduction d'une aire de section transversale du canal d'écoulement (FC) à une deuxième distance (d2) à partir de la première ouverture de fluide (O1), la première distance (d1) étant supérieure à la deuxième distance (d2) ;
- ledit premier insert d'écoulement (FI1) étant constitué d'un matériau polymère et formant, un premier support de réflecteur à ultrasons (RH1) agencé à l'extérieur d'une première extrémité (MTE1) du tuyau de mesure (MT) et une bride de montage (FL1) étant agencée pour venir en prise avec la première face de montage (F1) ; et
- ledit second insert d'écoulement (FI2) étant fabriqué à partir d'un matériau polymère et formant un second support de réflecteur à ultrasons (RH2) raccordé structurellement à une bride de montage (FL2) et étant agencé pour se mettre en prise avec la deuxième face de montage (F2), **caractérisé en ce que** :
- le boîtier est en matériau polymère ;
- l'aire de section transversale du canal d'écoulement à la première distance (d1) est plus petite que l'aire de section transversale du canal d'écoulement à la deuxième distance (d2) ; et
- le premier insert d'écoulement (FI1) forme un tuyau de mesure (MT) et possède une bride de montage (FL1) raccordée structurellement au tuyau de mesure.

2. Débitmètre selon la revendication 1, ladite bride de montage (FL1) du premier insert d'écoulement (FI1) étant fixée à la première face de montage (F1) au moyen d'un soudage par ultrasons.

3. Débitmètre selon la revendication 1 ou 2, ladite bride de montage (FL2) du second insert d'écoulement (FI2) étant fixée à la deuxième face de montage (F2) au moyen d'un soudage par ultrasons.

4. Débitmètre selon l'une quelconque des revendications précédentes, lesdits premier et second inserts d'écoulement étant agencés à l'intérieur du tuyau d'écoulement dans le prolongement l'un de l'autre.

5. Débitmètre selon l'une quelconque des revendications précédentes, une distance le long d'un axe longitudinal du tuyau d'écoulement entre la première face de montage (F1) et la deuxième face de montage correspondant sensiblement à l'extension du second insert d'écoulement le long de l'axe longitudinal.

6. Débitmètre selon l'une quelconque des revendications précédentes, ladite bride de montage (FL1) du premier insert d'écoulement (FI1) étant agencée au niveau d'une seconde extrémité (MTE2) du tuyau de mesure opposée au support de réflecteur.

7. Débitmètre selon l'une quelconque des revendications précédentes, lesdits premier et second inserts d'écoulement (FI1, FI2) comprenant des parties respectives (A1, A2) servant à se mettre en prise avec des parties correspondantes du tuyau d'écoulement (FT) du boîtier (H), de façon à déterminer la position angulaire des premier et second inserts d'écoulement (FI1, FI2) dans le tuyau d'écoulement (FT).

8. Débitmètre selon l'une quelconque des revendications précédentes, lesdites première et deuxième faces de montage (F1, F2) formant des surfaces respectives qui sont perpendiculaires ou sensiblement perpendiculaires à une direction longitudinale du tuyau d'écoulement (FT).

9. Débitmètre selon l'une quelconque des revendications précédentes, lesdites première et deuxième faces de montage (F1, F2) formant des faces circonférentielles respectives à l'intérieur du tuyau d'écoulement (FT), lesdites première et deuxième faces de montage (F1, F2) étant orientées vers la première ouverture de fluide (O1), de façon à permettre l'insertion des premier et second inserts d'écoulement (FI1, FI2) à partir de la première ouverture de fluide (O1).

10. Débitmètre selon l'une quelconque des revendications précédentes, ledit tuyau de mesure (MT) et ledit tuyau d'écoulement (FT) du boîtier (H) étant façonnés de façon à ménager un espace entre le tuyau de mesure (MT) et le tuyau d'écoulement (FT), ledit espace étant agencé pour être rempli de fluide durant le fonctionnement du débitmètre.

11. Débitmètre selon l'une quelconque des revendications précédentes, ladite bride de montage (FL1) du premier insert d'écoulement (FI1) étant fixée à la première face de montage (F1) de façon à fournir un raccordement étanche aux fluides au tuyau d'écoulement (FT).

12. Débitmètre selon l'une quelconque des revendications précédentes, ledit second insert d'écoulement (FI2) formant une structure de redressement d'écoulement (FNS) agencée pour redresser l'écoulement de fluide passant la structure de redressement.

13. Débitmètre selon l'une quelconque des revendications précédentes, ladite deuxième face de montage (F2) étant agencée en amont du premier transducteur et ladite première face de montage (F1) étant agencée en aval du premier transducteur.

14. Débitmètre selon l'une quelconque des revendications précédentes, ladite deuxième face de montage (F2) étant décalée de la première ouverture de fluide d'une distance correspondant à une largeur de la partie externe filetée de l'extrémité du tuyau d'écoulement.

15. Débitmètre selon l'une quelconque des revendications précédentes, une troisième face de montage (F3) étant formée dans le tuyau d'écoulement (FT) par une réduction d'une aire de section transversale du canal d'écoulement (FC) à une troisième distance (d3) de la première ouverture de fluide (O1), ladite deuxième distance (d2) étant supérieure à la troisième distance (d3), ladite aire de section transversale du canal d'écoulement (FC) étant plus petite à la deuxième distance (d2) que l'aire de la section transversale du canal d'écoulement à la troisième distance (d3).
